# EUROPÄISCHE PATENTSCHRIFT

(11) **EP 3 347 685 B1**
(45) Veröffentlichungstag und Bekanntmachung des Hinweises auf die Patenterteilung: **22.05.2024**
(21) Anmeldenummer: 16769898.4
(22) Anmeldetag: 09.09.2016
(51) Int. Cl.: G01H 9/00, B23Q 17/12, B23Q 17/24

(54) **VERFAHREN UND VORRICHTUNG ZUM BESTIMMEN EINER SCHWINGUNGSAMPLITUDE EINES WERKZEUGS**
METHOD AND DEVICE FOR DETERMINING A VIBRATION AMPLITUDE OF A TOOL
PROCÉDÉ ET DISPOSITIF POUR DÉTERMINER UNE AMPLITUDE DE VIBRATION D'UN OUTIL

(30) Priorität: 09.09.2015 DE 102015217200
(43) Veröffentlichungstag der Anmeldung: 18.07.2018
(73) Patentinhaber: DMG MORI Ultrasonic Lasertec GmbH, 55758 Stipshausen (DE)
(72) Erfinder: KETELAER, Jens, 65205 Wiesbaden (DE); FRANZMANN, Fabian, 55743 Idar-Oberstein (DE)
(74) Vertreter: MERH-IP Matias Erny Reichl Hoffmann Patentanwälte PartG mbB
(86) Internationale Anmeldenummer: PCT/EP2016/071357
(87) Internationale Veröffentlichungsnummer: WO 2017/042365

(56) Entgegenhaltungen:
- EP-A1- 1 431 729
- EP-A1- 1 745 884
- DE-A1- 10 111 974
- GB-A- 1 510 299

## Beschreibung

Die vorliegende Erfindung betrifft ein Verfahren und eine Vorrichtung zum Bestimmen einer Schwingungsamplitude eines Werkzeugs.

### HINTERGRUND DER ERFINDUNG

In Stand der Technik sind Werkzeugmaschinen bekannt, bei denen bei einer spanenden Bearbeitung eines Werkstücks durch ein Werkzeug der Rotationsbewegung des Werkzeugs eine Ultraschallschwingung des Werkzeugs überlagert werden kann.

EP 1 763 416 B1 beschreibt in diesem Zusammenhang ein Werkzeug mit einem Werkzeughalter, der an einem ersten Ende eine Werkzeughalteraufnahme zum Adaptieren an eine drehbare Spindelnase, und an einem zweiten, dem ersten gegenüberliegenden Ende eine Werkzeugaufnahme aufweist, und mit einem in die Werkzeugaufnahme einsetzbaren Werkzeugkopf, wobei der Werkzeughalter einen Schwingungsmotor umfasst.

Um das Werkzeug in die Ultraschallschwingung zu versetzen, kann beispielsweise ein Piezo-Antrieb verwendet werden, wobei eine elektrische Spannung eine Änderung der Dicke der Piezoscheiben hervorruft. Für bestimmte Frequenzen entsteht dabei eine stehende Welle im Werkzeughalter (resonante Anregung).

Dabei ist zu beachten, dass die Resonanzfrequenzen sowie die Schwingungsamplituden in Resonanz von den Eigenschaften des eingesetzten Werkzeugs wie dessen Geometrie oder Material abhängen, so dass der Werkzeughalter nicht bereits ab Werk auf eine bestimmte Schwingungsamplitude geeicht werden kann.

Die EP 1 431 729 A1 beschreibt eine Einrichtung für die Messung einer Amplitude einer frei schwingenden Kapillare eines Wire Bonders für das Verdrahten von Halbleiterchips. Dabei wird die Kapillare mittels eines Ultraschallgebers in Schwingung versetzt. Für die Messung der Amplitude selbst wird die Abschattung eines Lichtstrahls durch die schwingende Spitze der Kapillare mittels eines Lichtempfängers detektiert.

Dabei kann es in dem in der EP 1 431 729 A1 beschriebenen Verfahren zu einer Unterbrechung des Lichtstrahls durch vollständige Abschattung des Lichtstrahls durch die Spitze der Kapillare kommen. Da ausschließlich anhand des Abschattungsgrades eine Aussage getroffen werden kann, wie sehr die Kapillare schwingt, ist diese Aussage bei der Möglichkeit einer vollständigen Abschattung nicht mehr möglich, da der Lichtempfänger kein Signal mehr vom Lichtstrahl detektieren kann. Es kommt somit zum Verlust des Messsignals, was wiederum zu einer mangelhaften Messung der Kapillarschwingung führt. Ferner beschränkt sich das in der EP 1 431 729 A1 beschriebene Verfahren auf rotationssymmetrische Werkzeuge wie das Beispiel der Kapillare des Wire Bonders unterstreicht. Da aber in den meisten Fällen die Werkzeuge Asymmetrien aufweisen die in den Lichtstrahl hineinragen und dadurch die Messung der Schwingungsamplitude negativ beeinflussen, bleibt dieses Verfahren für solche Werkzeuge weniger geeignet,

### ZUSAMMENFASSUNG DER ERFINDUNG

Eine Aufgabe der vorliegenden Erfindung ist es daher, ein Verfahren und eine Vorrichtung bereitzustellen, mit dem die Schwingungsamplitude eines schwingenden Werkzeugs gemessen werden kann.

Diese Aufgabe wird gelöst durch ein Verfahren nach Anspruch 1 und eine Vorrichtung nach Anspruch 8.

Die abhängigen Ansprüche beziehen sich auf vorteilhafte Ausführungsbeispiele des erfindungsgemäßen Verfahrens und der erfindungsgemäßen Vorrichtung.

Das erfindungsgemäße Verfahren zum Bestimmen einer Schwingungsamplitude erfolgt nach den Verfahrensschritten wie in Anspruch 1 offenbart.

Auf diese Weise wird eine werkzeugspezifische Messung der tatsächlichen Schwingungsamplitude einer Werkzeugschwingung beispielsweise im Ultraschallfrequenzbereich in der Werkzeugmaschine selbst ermöglicht. Als Lichtschranke kann dabei ein herkömmlicher Werkzeugvermessungslaser verwendet werden, der häufig bereits in der Werkzeugmaschine vorhanden ist. Somit ist das erfindungsgemäße Verfahren kostengünstig ohne konstruktive Veränderungen an der Werkzeugmaschine durchführbar, da es mit der bereits vorhandenen Ausstattung der Werkzeugmaschine ohne zusätzliche Installationen im Maschineninnenraum durchgeführt werden kann. Darüber hinaus erfolgt die Messung der Schwingungsamplitude mit Hilfe der Lichtschranke berührungslos, so dass das Werkzeug nicht beschädigt werden kann.

Vorzugsweise wird das Verfahren durch folgenden Schritt ergänzt: Versetzen des Werkzeugs in eine Rotation um eine Achse senkrecht zum Lichtstrahl, insbesondere während der Vermessung der Schwingungsamplitude bzw. während der Anregung der Schwingung des Werkzeugs, wenn sich das Werkzeug im Lichtstrahl befindet.

Insbesondere umfasst das Verfahren bevorzugt das Aufnehmen des Werkzeugs bzw. eines das Werkzeug haltenden Werkzeughalters in einer Arbeitsspindel der Werkzeugmaschine und Antreiben einer Rotation des Werkzeugs mittels der Arbeitsspindel, insbesondere während des Schritts Ermitteln der Schwingungsamplitude des Werkzeugs aus einer durch die Schwingung des Werkzeugs bewirkten Modulation bzw. Änderung des Empfängersignals, wenn das Werkzeug im Lichtstrahl positioniert ist.

Der Vorteil liegt insbesondere darin, dass durch die Rotation, z.B. Angetrieben mit der Arbeitsspindel der Werkzeugmaschine, selbst Werkzeuge mit nicht rotationssymmetrischem Aufbau in einer Ansicht senkrecht zur Rotationsachse als rotationssymmetrisches Werkzeug erscheinen. Dies kann wiederum besonders vorteilhaft für die Amplitudenmessung der Schwingung des Werkzeugs verwendet werden, da hierdurch die von einer das Werkzeug antreibenden Spindel abgewandte Seite des Werkzeugs zumindest eine ringförmige Fläche oder kreisförmigen Ring um die Rotationsachse des Werkzeugs bildet. Diese Fläche oder Ring kann wiederum für die Abschattung des Lichtstrahls verwendet werden, was sich bei einem nicht rotationssymmetrischen Werkzeug ohne Rotation als schwierig heraus gestellt hat.

Erfindungsmässig weist das Werkzeug mindestens eine Schneide (z.B. eine Frässchneide eines Fräswerkzeugs) auf, die in Richtung der Schwingung des Werkzeugs vom restlichen Werkzeug hervorsteht.

Der Vorteil besteht darin, dass die Werkzeuggeometrie beliebig in Richtung der Schwingung ausgestaltet sein kann, da durch die Rotation des Werkzeugs eventuelle Asymmetrien wieder kompensiert werden können.

Erfindungsgemäss steht die Schneide des Werkzeugs zusätzlich senkrecht zu der Richtung der Schwingung des Werkzeugs vom restlichen Werkzeug hervor.

Auch hier liegt der Vorteil darin, dass die Werkzeuggeometrie, insbesondere bei nicht rotationssymmetrischen oder nicht kontinuierlich rotationssymmetrischen Werkzeuggeometrie, nun keinen wesentlichen Einfluss mehr auf die Messanordnung bzw. auf die Zuverlässigkeit der Messung der Schwingungsamplitude des Werkzeugs ausübt, da durch das in Rotation versetzen des Werkzeugs auch hier eventuelle Asymmetrien kompensiert werden können.

Zudem hat dies den Vorteil, dass die Schwingungsamplitude direkt in der auch für spätere Bearbeitungen von Werkstücken genutzten Einspannung des Werkzeugs bzw. Werkzeughalters an der Arbeitsspindel der Werkzeugmaschine vermessen werden kann, ggf. direkt vor der Bearbeitung des Werkstücks.

Vorzugsweise wird vor dem Versetzen des Werkzeugs in die Schwingung die Position der Werkzeugspitze in dem Lichtstrahl derart variiert, dass sich eine Signalstärke des Empfängersignals in Abhängigkeit der Position der Werkzeugspitze ändert.

Dies hat den Vorteil, dass weder die Funktionsfähigkeit noch die Genauigkeit des Verfahrens durch die Geometrie oder das Material des Werkzeugs beeinflusst wird, da allein der Grad der Abschattung des Lichtstrahls durch das Werkzeug für die Amplitudenmessung entscheidend ist.

Vorzugsweise wird die Position der Werkzeugspitze in einem Bereich innerhalb des Lichtstrahls schrittweise entlang einer Richtung senkrecht zum Lichtstrahl variiert und bei jedem Schritt der Position der Werkzeugspitze eine entsprechende Signalstärke des Empfängersignals zugeordnet.

Auf diese Weise erfolgt eine Kalibration des Systems für eine absolute Amplitudenmessung. Bei der Kalibration wird funktionaler Zusammenhang zwischen der Position der Werkzeugspitze und der Signalstärke des Empfängersignals ermittelt, so dass zu einem späteren Zeitpunkt aus einer gemessenen Signalstärke des Empfängersignals die zugehörige Position der Werkzeugspitze bestimmt werden kann.

Vorzugsweise wird die Schwingungsamplitude des Werkzeugs aus einer Differenz der maximalen Signalstärke und der minimalen Signalstärke des Empfängersignals ermittelt.

Nach erfolgter Kalibration kann für ein schwingendes Werkzeug aus der maximalen Signalstärke eine erste Position der Werkzeugspitze und aus der minimalen Signalstärke eine zweite Position der Werkzeugspitze ermittelt werden. Die Differenz dieser beiden Positionen liefert die Amplitude der Werkzeugschwingung.

Vorzugsweise entspricht die Richtung senkrecht zum Lichtstrahl einer Richtung einer Werkzeugachse.

Auf diese Weise kann die Schwingungsamplitude für ein in axialer Richtung schwingendes Werkzeug ermittelt werden.

Alternativ entspricht die Richtung senkrecht zum Lichtstrahl vorzugsweise einer Richtung senkrecht zu einer Werkzeugachse.

Auf diese Weise kann die Schwingungsamplitude für Werkzeug ermittelt werden, das in einer Richtung senkrecht zur Werkzeugachse schwingt. Das erfindungsgemäße Verfahren ermöglicht also eine Charakterisierung der Werkzeugschwingung in mehreren Richtungen.

Vorzugsweise ist das Empfängersignal ein von dem Empfänger erzeugtes, zu der von dem Empfänger detektierten Lichtstärke proportionales, analoges Spannungssignal.

Dies hat den Vorteil, dass die nötigen Berechnungen aufgrund des linearen Zusammenhangs zwischen Lichtstärke und Spannung einfach und schnell durchzuführen sind.

Vorzugsweise wird das Werkzeug derart in die Schwingung versetzt, dass die Werkzeugspitze innerhalb des Lichtstrahls schwingt.

Beispielsweise wird die schwingende Werkzeugspitze zum Zweck der Messung der Schwingungsamplitude so in der Lichtschranke positioniert, dass die Werkzeugspitze einen in etwa gleichen Abstand zu Sender und Empfänger hat und sich in etwa in der Mitte des Lichtstrahldurchmessers befindet. Der Lichtstrahldurchmesser wird so breit gewählt, dass die Werkzeugspitze vollständig innerhalb des Lichtstrahls schwingt. Auf diese Weise bildet die Modulation des Empfängersignals direkt die Werkzeugschwingung ab.

Vorzugsweise hat das erfindungsgemäße Verfahren die weiteren Schritte: Erzeugen eines Sensorsignals aus der Schwingung des in einem Werkzeughalter angeordneten Werkzeugs durch eine in dem Werkzeughalter angeordnete Sensoreinrichtung; Ermitteln einer Schwingungsfrequenz der Schwingung des Werkzeugs aus dem Sensorsignal in Abhängigkeit der Schwingungsamplitude des Werkzeugs; Ermitteln der Schwingungsamplitude des Werkzeugs aus dem Sensorsignal.

Dies hat den Vorteil, dass nach einmal erfolgter Kalibrierung für ein bestimmtes Werkzeug mit Hilfe der Lichtschranke die Lichtschranke für die Amplitudenmessung nicht mehr nötig ist und entfernt werden kann, da die Schwingungsamplitude des schwingenden Werkzeugs direkt aus dem Sensorsignal ermittelt werden kann.

Vorzugsweise wird die Schwingungsfrequenz der Schwingung des Werkzeugs schrittweise variiert und bei jedem Schritt der Schwingungsfrequenz eine entsprechende Schwingungsamplitude des Werkzeugs zugeordnet.

In anderen Worten, es erfolgt eine zweistufige Kalibrierung derart, dass zunächst ein funktionaler Zusammenhang zwischen der Position der Werkzeugspitze und der Signalstärke des Empfängersignals ermittelt wird, so dass für ein schwingendes Werkzeug aus dem minimalen und dem maximalen Wert des Empfängersignals auf die Schwingungsamplitude geschlossen werden kann. Anschließend wird ein funktionaler Zusammenhang zwischen der Schwingungsamplitude und der Schwingungsfrequenz ermittelt, so dass für das schwingende Werkzeug aus einer gemessenen Schwingungsfrequenz auf die Schwingungsamplitude geschlossen werden kann.

Die erfindungsgemäße Vorrichtung zum Bestimmen einer Schwingungsamplitude eines Werkzeugs ist in Anspruch 8 offenbart.

Auf diese Weise wird eine werkzeugspezifische Messung der tatsächlichen Schwingungsamplitude einer Werkzeugschwingung im Ultraschallfrequenzbereich in der Werkzeugmaschine selbst ermöglicht. Als Lichtschranke kann dabei ein herkömmlicher Werkzeugvermessungslaser verwendet werden, der häufig bereits in der Werkzeugmaschine vorhanden ist. Somit kann die erfindungsgemäße Vorrichtung kostengünstig ohne konstruktive Veränderungen an der Werkzeugmaschine mit der bereits vorhandenen Ausstattung der Werkzeugmaschine ohne zusätzliche Installationen im Maschineninnenraum eingerichtet werden. Darüber hinaus erfolgt die Messung der Schwingungsamplitude mit Hilfe der Lichtschranke berührungslos, so dass das Werkzeug nicht beschädigt werden kann.

Vorzugsweise ist die Einrichtung zum Positionieren der Werkzeugspitze dazu eingerichtet, die Position der Werkzeugspitze in dem Lichtstrahl derart zu variieren, dass sich eine Signalstärke des Empfängersignals in Abhängigkeit der Position der Werkzeugspitze ändert.

Dies hat den Vorteil, dass weder die Funktionsfähigkeit noch die Genauigkeit der Vorrichtung durch die Geometrie oder das Material des Werkzeugs beeinflusst wird, da allein der Grad der Abschattung des Lichtstrahls durch das Werkzeug für die Amplitudenmessung entscheidend ist.

Vorzugsweise weist die Vorrichtung eine Einrichtung zum Zuordnen der Signalstärke des Empfängersignals zu der Position der Werkzeugspitze auf, wobei die Einrichtung zum Positionieren der Werkzeugspitze dazu eingerichtet ist, die Position der Werkzeugspitze in einem Bereich innerhalb des Lichtstrahls schrittweise entlang einer Richtung senkrecht zum Lichtstrahl zu variieren, und die Einrichtung zum Zuordnen der Signalstärke des Empfängersignals zu der Position der Werkzeugspitze dazu eingerichtet ist, bei jedem Schritt der Position der Werkzeugspitze eine entsprechende Signalstärke des Empfängersignals zuzuordnen.

Auf diese Weise erfolgt eine Kalibration des Systems für eine absolute Amplitudenmessung mit der erfindungsgemäßen Vorrichtung. Bei der Kalibration wird funktionaler Zusammenhang zwischen der Position der Werkzeugspitze und der Signalstärke des Empfängersignals ermittelt, so dass zu einem späteren Zeitpunkt aus einer gemessenen Signalstärke des Empfängersignals die zugehörige Position der Werkzeugspitze bestimmt werden kann.

Vorzugsweise ist die Einrichtung zum Ermitteln der Schwingungsamplitude des Werkzeugs dazu eingerichtet, die Schwingungsamplitude des Werkzeugs aus einer Differenz der maximalen Signalstärke und der minimalen Signalstärke des Empfängersignals zu ermitteln.

Nach erfolgter Kalibration kann mit der Vorrichtung für ein schwingendes Werkzeug aus der maximalen Signalstärke eine erste Position der Werkzeugspitze und aus der minimalen Signalstärke eine zweite Position der Werkzeugspitze ermittelt werden. Die Differenz dieser beiden Positionen liefert die Amplitude der Werkzeugschwingung.

Vorzugsweise entspricht die Richtung senkrecht zum Lichtstrahl einer Richtung einer Werkzeugachse.

Auf diese Weise kann die Schwingungsamplitude für ein in axialer Richtung schwingendes Werkzeug ermittelt werden.

Alternativ entspricht die Richtung senkrecht zum Lichtstrahl vorzugsweise einer Richtung senkrecht zu einer Werkzeugachse.

Auf diese Weise kann die Schwingungsamplitude für Werkzeug ermittelt werden, das in einer Richtung senkrecht zur Werkzeugachse schwingt. Die erfindungsgemäße Vorrichtung ermöglicht also eine Charakterisierung der Werkzeugschwingung in mehreren Richtungen.

Vorzugsweise ist der Empfänger der Lichtschranke dazu eingerichtet, das Empfängersignal als ein zu der von dem Empfänger detektierten Lichtstärke proportionales, analoges Spannungssignal zu erzeugen.

Dies hat den Vorteil, dass die nötigen Berechnungen aufgrund des linearen Zusammenhangs zwischen Lichtstärke und Spannung einfach und schnell durchzuführen sind.

Vorzugsweise ist die Einrichtung zum Versetzen des Werkzeugs in die Schwingung dazu eingerichtet, das Werkzeug derart in die Schwingung zu versetzen, dass die Werkzeugspitze innerhalb des Lichtstrahls schwingt.

Beispielsweise wird die schwingende Werkzeugspitze zum Zweck der Messung der Schwingungsamplitude so in der Lichtschranke positioniert, dass die Werkzeugspitze einen in etwa gleichen Abstand zu Sender und Empfänger hat und sich in etwa in der Mitte des Lichtstrahldurchmessers befindet. Der Lichtstrahldurchmesser wird so breit gewählt, dass die Werkzeugspitze vollständig innerhalb des Lichtstrahls schwingt. Auf diese Weise bildet die Modulation des Empfängersignals direkt die Werkzeugschwingung ab.

Vorzugsweise weist die erfindungsgemäße Vorrichtung weiterhin auf: einen Werkzeughalter zum Aufnehmen des Werkzeugs; eine in dem Werkzeughalter angeordnete Sensoreinrichtung zum Erzeugen eines Sensorsignals aus der Schwingung des Werkzeugs; eine Einrichtung zum Ermitteln einer Schwingungsfrequenz der Schwingung des Werkzeugs aus dem Sensorsignal in Abhängigkeit der Schwingungsamplitude des Werkzeugs; und eine Einrichtung zum Ermitteln der Schwingungsamplitude des Werkzeugs aus dem Sensorsignal.

Dies hat den Vorteil, dass nach einmal erfolgter Kalibrierung für ein bestimmtes Werkzeug mit Hilfe der Lichtschranke die Lichtschranke für die Amplitudenmessung nicht mehr nötig ist und entfernt werden kann, da die Schwingungsamplitude des schwingenden Werkzeugs direkt aus dem Sensorsignal ermittelt werden kann.

Vorzugsweise weist die Vorrichtung weiterhin auf: eine Einrichtung zum schrittweise Variieren der Schwingungsfrequenz der Schwingung des Werkzeugs, und eine Einrichtung zum Zuordnen der Schwingungsamplitude des Werkzeugs zu der Schwingungsfrequenz, wobei die Einrichtung zum Zuordnen der Schwingungsamplitude des Werkzeugs zu der Schwingungsfrequenz dazu eingerichtet ist, bei jedem Schritt der Schwingungsfrequenz eine entsprechende Schwingungsamplitude des Werkzeugs zuzuordnen.

In anderen Worten, die erfindungsgemäße Vorrichtung ermöglicht eine zweistufige Kalibrierung derart, dass zunächst ein funktionaler Zusammenhang zwischen der Position der Werkzeugspitze und der Signalstärke des Empfängersignals ermittelt wird, so dass für ein schwingendes Werkzeug aus dem minimalen und dem maximalen Wert des Empfängersignals auf die Schwingungsamplitude geschlossen werden kann. Anschließend wird ein funktionaler Zusammenhang zwischen der Schwingungsamplitude und der Schwingungsfrequenz ermittelt, so dass für das schwingende Werkzeug aus einer gemessenen Schwingungsfrequenz auf die Schwingungsamplitude geschlossen werden kann.

Eine erfindungsgemäße Werkzeugmaschine weist die erfindungsgemäße Vorrichtung auf und ist dazu eingerichtet, die Schwingungsamplitude der Schwingung des Werkzeugs gemäß dem erfindungsgemäßen Verfahren zu bestimmen.

### KURZBESCHREIBUNG DER FIGUREN

- Fig. 1: zeigt einen Ausschnitt eines Ausführungsbeispiels einer erfindungsgemäßen Vorrichtung.
- Fig. 2: zeigt schematisch einen Ausschnitt eines Ausführungsbeispiels einer erfindungsgemäßen Vorrichtung.
- Fig. 3: zeigt beispielhaft einen Werkzeughalter zur Verwendung in dem erfindungsgemäßen Verfahren.
- Fig. 4: zeigt schematisch ein Ausführungsbeispiel einer erfindungsgemäßen Vorrichtung.

### DETAILLIERTE BESCHREIBUNG DER FIGUREN UND DER BEVORZUGTEN AUSFÜHRUNGSBEISPIELE DER VORLIEGENDEN ERFINDUNG

Im Folgenden wird die vorliegende Erfindung detailliert anhand von Ausführungsbeispielen und beispielhaften Figuren beschrieben und erläutert.

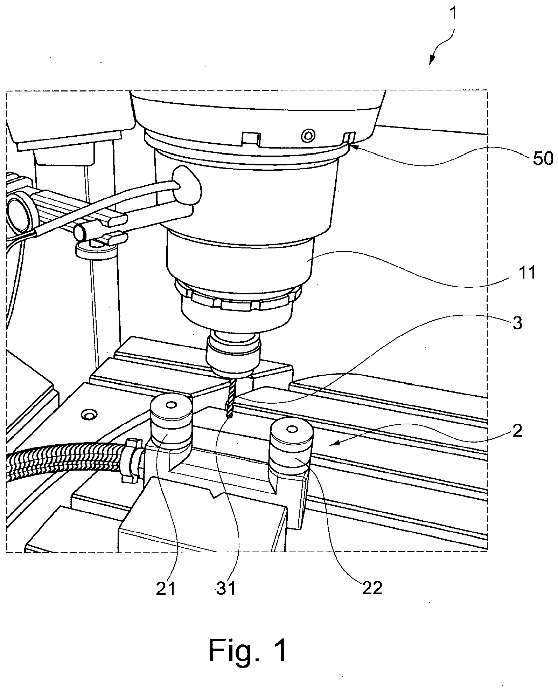

Fig. 1 zeigt einen Ausschnitt eines Ausführungsbeispiels einer erfindungsgemäßen Vorrichtung. Gezeigt ist eine Lichtschranke 2 mit einem Sender 21, die einen Lichtstrahl 23 (in Fig. 1 nicht sichtbar) erzeugt und einem Empfänger 22, der die Lichtstärke des Lichtstrahls 23 detektiert. Als Lichtschranke 2 kann beispielsweise ein System zur berührungslosen Werkzeugbrucherkennung von RENISHAW oder ein BLUM Lasersystem zur Werkzeugkontrolle und Bruchkontrolle verwendet werden, bei dem ein gebündelter Laserstrahl 23 vom Sender 21 ausgesendet wird und der Empfänger 22 so ausgerichtet ist, dass der Laserstrahl 23 auf dem Empfänger 22 auftrifft. Diese Laserlichtschranke 2 wird mit Hilfe eines Träger- oder Montagesystems im Bearbeitungsraum einer Werkzeugmaschine 1 innerhalb des Verfahrbereichs der Achsen für das Werkzeug 3 montiert. Der Anbau der Lichtschranke 2 ist auf oder neben dem Maschinentisch möglich. Der Empfänger 22 erzeugt ein Empfängersignal, das zu der detektierten Lichtstärke proportional ist und als analoges Spannungssignal vom Empfänger 22 ausgegeben wird.

Zusätzlich weist die Werkzeugmaschine 1 eine Spindel 50 (z.B. eine werkzeugtragende Arbeitsspindel) auf, in dieser das Werkzeug 3 über den Werkzeughalter 11 aufgenommen ist. Die Spindel 50 ist ferner dazu eingerichtet, den Werkzeughalter 11 sowie das Werkzeug 3 in Rotation zu versetzen. Während die Spindel 50 das Werkzeug 3 rotatorisch antreibt, findet die Messung der Schwingungsamplitude beispielhaft mittels des von dem Sender 21 ausgesendeten Lichtstrahls 23 und der von dem Empfänger 22 detektierten Lichtstärke des durch das Werkzeug 3 abgeschatteten Lichtstrahls 23 statt.

Im Einzelnen erfolgt die Detektion der Schwingungsamplitude des Werkzeugs 3 beispielhaft wie folgt: Der Werkzeughalter 11 wird so positioniert, dass sich die Werkzeugspitze 31 des Werkzeugs 3, das in dem Werkzeughalter 11 aufgenommen ist, zwischen dem Sender 21 und dem Empfänger 22 in dem Lichtstrahl 23 der Lichtschranke 2 befindet und so den Lichstrahl 23 abschattet. Wenn das Werkzeug 3 in eine Ultraschallschwingung versetzt wird, ändert sich der Grad der Abschattung aufgrund der im Lichtstrahl 23 schwingenden Werkzeugspitze 31. Dies führt zu einer Modulation des Empfängersignals, aus der die Schwingungsamplitude der Werkzeugschwingung ermittelt werden kann.

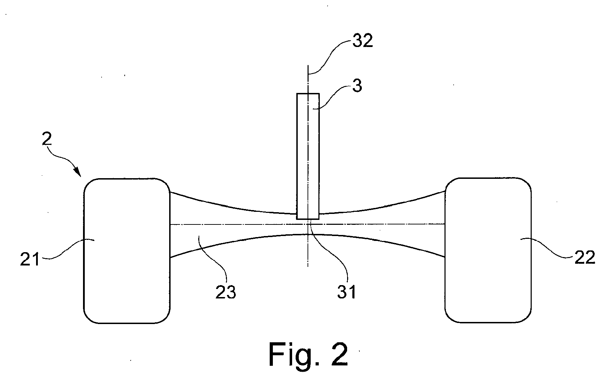

Dieses Grundprinzip der Erfindung wird anhand von Fig. 2 im Einzelnen erläutert. Zunächst wird das System kalibriert. Dazu wird die Werkzeugspitze 31 des nicht schwingenden Werkzeugs 3 nahe am Lichtstrahl 23 im Bereich der Strahltaille positioniert. An der Strahltaille ist der Durchmesser des Lichtstrahls 23 am kleinsten. Die Werkzeugachse 32 ist senkrecht zum Lichtstrahl 23 ausgerichtet. Dann wird die Werkzeugspitze 31 mit Hilfe der verfahrbaren Achsen der Werkzeugmaschine 1 in Schritten von z.B. 1 µm in der Richtung entlang der Werkzeugachse 32 durch den Lichtstrahl 23 gefahren. Dadurch wird der Lichtstrahl 23 zunehmend abgeschattet. Bei jedem Schritt wird die Lichtstärke vom Empfänger 22 gemessen, in das Empfängersignal umgewandelt und der Wert der Spannung der aktuellen Werkzeugposition zugeordnet. Auf diese Weise erhält man eine Funktion der Werkzeugposition in Abhängigkeit der Spannung. Der Durchmesser der Strahltaille ist dabei so groß, dass man mehrere Positionierungsschritte benötigt, um von voller Lichtstärke auf völlige Abschattung zu kommen und deutlich größer als die maximal zu erwartende Schwingungsamplitude der Werkzeugspitze 31.

Nach erfolgter Kalibrierung kann die Schwingungsamplitude folgendermaßen ermittelt werden: Die Werkzeugspitze 31 wird in etwa mittig bezüglich der Strahltaille und bezüglich des Senders 21 und des Empfängers 22 im Lichtstrahl 23 positioniert und zu einer Ultraschallschwingung angeregt. Die schwingende Werkzeugspitze 31 bewirkt so eine Modulierung des zur Lichtstärke proportionalen Empfängersignals. Aus dem Spitze-Spitze-Wert des Empfängersignals wird mit Hilfe der zuvor ermittelten Funktion der Werkzeugposition in Abhängigkeit der Spannung die Schwingungsamplitude bestimmt.

Bei der Kalibrierung kann auch so vorgegangen werden, dass die Werkzeugspitze 31 nicht entlang der Werkzeugachse 32 verschoben wird, sondern in einer Richtung, die senkrecht zur Werkzeugachse 32 und senkrecht zum Lichtstrahl 23 ist. Diese Kalibrierung wird verwendet, um die Schwingungsamplitude der Werkzeugschwingung in der Richtung senkrecht zur Werkzeugachse 32 zu ermitteln.

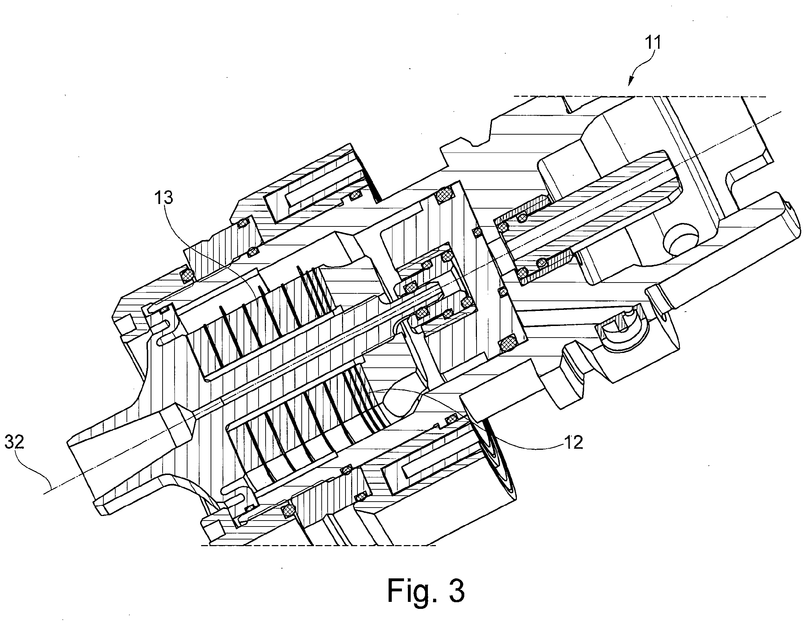

Fig. 3 zeigt beispielhaft einen Werkzeughalter 11 zur Verwendung in dem erfindungsgemäßen Verfahren, mit dem nach erfolgter Kalibrierung die Schwingungsamplitude des Werkzeugs 3 auch ohne die Lichtschranke 2 gemessen werden kann. Dazu wird das System folgendermaßen kalibriert.

Zunächst wird, wie anhand von Fig. 2 beschrieben, die Funktion der Werkzeugposition in Abhängigkeit der Spannung des Empfängersignals ermittelt.

Der Werkzeughalter 11 ist mit einer Sensoreinrichtung 12 ausgestattet, die aus der Werkzeugschwingung ein Sensorsignal erzeugt, das die Information über die Schwingungsfrequenz der Werkzeugschwingung enthält. Das Sensorsignal kann außerhalb des Werkzeughalters 11 von einer Analyseeinrichtung (nicht gezeigt) ausgewertet werden.

Das Werkzeug 3 wird nun in eine Ultraschallschwingung versetzt. Dies kann derart erfolgen, dass ein Generator (nicht gezeigt) ein Piezo-Element 13 im Werkzeughalter 11 zu einer mechanischen Schwingung anregt, die auf das Werkzeug 3 übertragen wird. Die Frequenz der Schwingung kann aus dem von der Sensoreinrichtung 12 erzeugten Sensorsignal ermittelt werden; die Amplitude kann aus dem von dem Empfänger 12 der Lichtschranke 2 erzeugten Empfängersignal ermittelt werden.

Anschließend wird die Schwingungsfrequenz des Werkzeugs 3 schrittweise variiert, beispielsweise, indem die Anregungsfrequenz des Generators variiert wird. Bei jedem Schritt wird die Schwingungsfrequenz sowie die Schwingungsamplitude gemessen und die Schwingungsfrequenz der jeweiligen Schwingungsamplitude zugeordnet. So erhält man eine Funktion der Schwingungsamplitude in Abhängigkeit der Schwingungsfrequenz. Nun kann die Lichtschranke 2 entfernt werden.

Die Schwingungsamplitude eines Werkzeugs 3 kann nach so erfolgter Kalibrierung des Systems ohne Zuhilfenahme der Lichtschranke 2 ermittelt werden. Dazu wird das Werkzeug 3 in Schwingung versetzt und die Schwingungsfrequenz aus dem Sensorsignal bestimmt. Aus der zuvor ermittelten Funktion der Schwingungsamplitude in Abhängigkeit der Schwingungsfrequenz kann die zugehörige Schwingungsamplitude bestimmt werden.

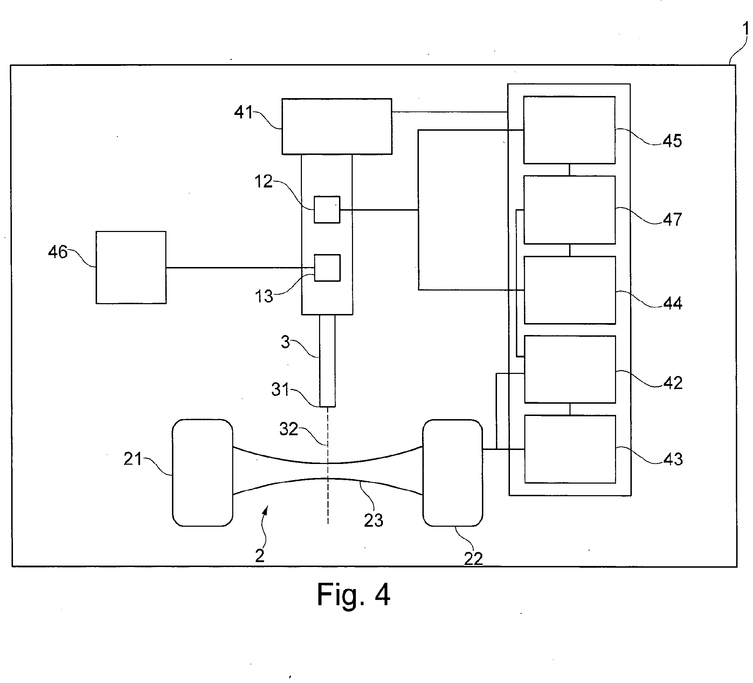

Fig. 4 zeigt schematisch ein Ausführungsbeispiel einer erfindungsgemäßen Vorrichtung. Die Einrichtung 41 zum Positionieren der Werkzeugspitze 31 kann beispielsweise in Form verfahrbarer Achsen vorliegen, die von der CNC-Steuerung der Werkzeugmaschine 1 einzeln verfahren werden können und so den an einer der Achsen aufgenommenen Werkzeughalter 11 mit dem Werkzeug 3 an die gewünschte Position bringen. Die Einrichtung 13 zum Versetzen des Werkzeugs 3 in eine Schwingung kann dem Piezo-Element 13 in Fig. 3 in dem Werkzeughalter 11 entsprechen. Die Einrichtung 46 zum Variieren der Schwingungsfrequenz des Werkzeugs 3 kann als ein Generator ausgebildet sein, der das Piezo-Element 13 mit einer bestimmten Anregungsfrequenz zu der Ultraschallschwingung anregt, wobei diese Anregungsfrequenz variiert werden kann.

Die Einrichtung 42 zum Ermitteln der Schwingungsamplitude aus dem Empfängersignal, die Einrichtung 43 zum Zuordnen der Signalstärke zu der Position der Werkzeugspitze, die Einrichtung 44 zum Ermitteln der Schwingungsfrequenz, die Einrichtung 45 zum Ermitteln der Schwingungsamplitude aus dem Sensorsignal, die Einrichtung 46 zum Variieren der Schwingungsfrequenz und die Einrichtung 47 zum Zuordnen der Schwingungsamplitude zu der Schwingungsfrequenz können Teil der Elektronik der Werkzeugmaschine 1 sein.

Dabei kann die Einrichtung 43 zum Zuordnen der Signalstärke zu der Position der Werkzeugspitze mit dem Empfänger 22 der Lichtschranke 2 verbunden sein, um das Empfängersignal zu von dem Empfänger 22 zu empfangen. Darüber hinaus kann die Einrichtung 43 zum Zuordnen der Signalstärke zu der Position der Werkzeugspitze die Kalibrierungsinformationen an die Einrichtung 42 zum Ermitteln der Schwingungsamplitude aus dem Empfängersignal übermitteln, die ebenfalls ein Empfängersignal von dem Empfänger 22 erhält.

Die Einrichtung 44 zum Ermitteln der Schwingungsfrequenz kann mit der Sensoreinrichtung 12 im Werkzeughalter 11 verbunden sein, um das Sensorsignal von der Sensoreinrichtung 12 zu empfangen. Darüber hinaus kann die Einrichtung 44 zum Ermitteln der Schwingungsfrequenz Daten über die Schwingungsfrequenz an die Einrichtung 47 zum Zuordnen der Schwingungsamplitude zu der Schwingungsfrequenz übermitteln, die wiederum Informationen über die Schwingungsamplitude von der Einrichtung 42 zum Ermitteln der Schwingungsamplitude aus dem Empfängersignal erhält.

Die Einrichtung 47 zum Zuordnen der Schwingungsamplitude zu der Schwingungsfrequenz gibt die Kalibrierungsinformationen an die Einrichtung 45 zum Ermitteln der Schwingungsamplitude aus dem Sensorsignal weiter, die zusätzlich das Sensorsignal von der Sensoreinrichtung 12 empfängt.

Es können auch mehrere oder alle der Einrichtungen 42 bis 45 und 47 zu einer Einrichtung zusammengefasst sein.

Die vorliegende Erfindung ist nicht auf die vorstehend beschriebenen Ausführungsbeispiele beschränkt, sondern vielmehr können die einzelnen Aspekte bzw. einzelnen Merkmale der vorstehend beschriebenen Ausführungsbeispiele kombiniert werden, um weitere Ausführungsbeispiele der vorliegenden Erfindung bereitzustellen, solange sich diese Ausführungsbeispiele innerhalb des Rahmens der Erfindung befinden, welcher durch die Ansprüche definiert ist.

### LISTE DER BEZUGSZEICHEN

- 1: Werkzeugmaschine
- 11: Werkzeughalter
- 12: Sensoreinrichtung
- 13: Piezo-Element

- 2: Lichtschranke
- 21: Sender
- 22: Empfänger
- 23: Lichtstrahl

- 3: Werkzeug
- 31: Werkzeugspitze
- 32: Werkzeugachse

- 41: Einrichtung zum Positionieren der Werkzeugspitze
- 42: Einrichtung zum Ermitteln der Schwingungsamplitude aus dem Empfängersignal
- 43: Einrichtung zum Zuordnen der Signalstärke zu der Position der Werkzeugspitze
- 44: Einrichtung zum Ermitteln der Schwingungsfrequenz
- 45: Einrichtung zum Ermitteln der Schwingungsamplitude aus dem Sensorsignal
- 46: Einrichtung zum Variieren der Schwingungsfrequenz
- 47: Einrichtung zum Zuordnen der Schwingungsamplitude zu der Schwingungsfrequenz

- 50: Spindel

## Patentansprüche

1. Verfahren zum Bestimmen einer Schwingungsamplitude eines Werkzeugs (3), das in einem Werkzeughalter (11) einer Werkzeugmaschine (1) aufgenommen ist, mit den Schritten:
Erzeugen eines Lichtstrahls (23) einer Lichtschranke (2) mit einem Sender (21) zum Erzeugen des Lichtstrahls (23) und einem Empfänger (22) zum Detektieren einer Lichtstärke des Lichtstrahls (23);
Erzeugen eines Empfängersignals basierend auf der vom Empfänger (22) der Lichtschranke (2) detektierten Lichtstärke des Lichtstrahls (23);
Positionieren einer Werkzeugspitze (31) des Werkzeugs (3) im Lichtstrahl (23);
Versetzen des Werkzeugs (3) in eine Schwingung mittels eines im Werkzeughalter (11) angeordneten Piezo-Elements (13) zum Versetzen des Werkzeugs (3) in eine Schwingung und eines Generators (46), der das Piezo-Element (13) mit einer bestimmten Anregungsfrequenz zu der Ultraschallschwingung anregt; und
Ermitteln der Schwingungsamplitude des Werkzeugs (3) aus einer durch die Schwingung des Werkzeugs (3) bewirkten Modulation des Empfängersignals, wobei
das Werkzeug (3) mindestens eine Schneide aufweist, die in Richtung der Schwingung des Werkzeugs (3) vom restlichen Werkzeug (3) hervorsteht, und die Schneide des Werkzeugs (3) senkrecht zur Richtung der Schwingung des Werkzeugs (3) vom restlichen Werkzeug (3) hervorsteht.

2. Verfahren nach Anspruch 1, wobei das Verfahren ferner folgenden Schritt aufweist:
Versetzen des Werkzeugs (3) in eine Rotation um eine Achse quer oder senkrecht zum Lichtstrahl (23) während des Schritts Ermitteln der Schwingungsamplitude des Werkzeugs (3).

3. Verfahren nach Anspruch 1 oder 2, wobei
vorm Versetzen des Werkzeugs (3) in die Schwingung die Position der Werkzeugspitze (31) im Lichtstrahl (23) derart variiert wird, dass sich eine Signalstärke des Empfängersignals in Abhängigkeit der Position der Werkzeugspitze (31) ändert, und
die Position der Werkzeugspitze (31) in einem Bereich innerhalb des Lichtstrahls (23) schrittweise entlang einer Richtung senkrecht zum Lichtstrahl (23) variiert wird und bei jedem Schritt der Position der Werkzeugspitze (31) eine entsprechende Signalstärke des Empfängersignals zugeordnet wird.

4. Verfahren nach einem der vorhergehenden Ansprüche, wobei
die Schwingungsamplitude des Werkzeugs (3) aus einer Differenz der maximalen Signalstärke und der minimalen Signalstärke des Empfängersignals ermittelt wird.

5. Verfahren nach Anspruch 3 oder 4, wobei
die Richtung senkrecht zum Lichtstrahl (23) einer Richtung einer Werkzeugachse (32) entspricht, oder
die Richtung senkrecht zum Lichtstrahl (23) einer Richtung senkrecht zu einer Werkzeugachse (32) entspricht.

6. Verfahren nach einem der vorhergehenden Ansprüche, wobei
das Empfängersignal ein vom Empfänger (22) erzeugtes, zur vom Empfänger (22) detektierten Lichtstärke proportionales, analoges Spannungssignal ist, und
das Werkzeug (3) derart in die Schwingung versetzt wird, dass die Werkzeugspitze (31) innerhalb des Lichtstrahls (23) schwingt.

7. Verfahren nach einem der vorhergehenden Ansprüche, mit den weiteren Schritten:
Erzeugen eines Sensorsignals aus der Schwingung des in einem Werkzeughalter (11) angeordneten Werkzeugs (3) durch eine im Werkzeughalter (11) angeordnete Sensoreinrichtung (12);
Ermitteln einer Schwingungsfrequenz der Schwingung des Werkzeugs (3) aus dem Sensorsignal in Abhängigkeit der Schwingungsamplitude des Werkzeugs (3);
Ermitteln der Schwingungsamplitude des Werkzeugs (3) aus dem Sensorsignal, wobei
die Schwingungsfrequenz der Schwingung des Werkzeugs (3) schrittweise variiert wird und bei jedem Schritt der Schwingungsfrequenz eine entsprechende Schwingungsamplitude des Werkzeugs (3) zugeordnet wird.

8. Vorrichtung zum Bestimmen einer Schwingungsamplitude eines Werkzeugs (3), das in einem Werkzeughalter (11) einer Werkzeugmaschine (1) aufgenommen ist, mit
einer Lichtschranke (2) mit einem Sender (21) zum Erzeugen eines Lichtstrahls (23) und einem Empfänger (22) zum Detektieren einer Lichtstärke des Lichtstrahls (23) und zum Erzeugen eines Empfängersignals basierend auf der detektierten Lichtstärke;
einer Einrichtung (41) zum Positionieren einer Werkzeugspitze (31) des Werkzeugs (3) im Lichtstrahl (23);
einem im Werkzeughalter (11) angeordneten Piezo-Elements (13) zum Versetzen des Werkzeugs (3) in eine Schwingung;
ein Generator (46) zum schrittweise Variieren der Schwingungsfrequenz der Schwingung des Werkzeugs (3), der das Piezo-Element (13) mit einer bestimmten Anregungsfrequenz zu der Ultraschallschwingung anregt; und
einer Einrichtung (42) zum Ermitteln der Schwingungsamplitude des Werkzeugs (3) aus einer durch die Schwingung des Werkzeugs (3) bewirkten Modulation des Empfängersignals, wobei
das Werkzeug (3) mindestens eine Schneide aufweist, die in Richtung der Schwingung des Werkzeugs (3) vom restlichen Werkzeug (3) hervorsteht, und die Schneide des Werkzeugs (3) senkrecht zur Richtung der Schwingung des Werkzeugs (3) vom restlichen Werkzeug (3) hervorsteht.

9. Vorrichtung nach Anspruch 8, wobei
die Einrichtung (41) zum Positionieren der Werkzeugspitze (31) dazu eingerichtet ist, die Position der Werkzeugspitze (31) im Lichtstrahl (23) derart zu variieren, dass sich eine Signalstärke des Empfängersignals in Abhängigkeit der Position der Werkzeugspitze (31) ändert,
wobei die Vorrichtung ferner aufweist:
eine Einrichtung (43) zum Zuordnen der Signalstärke des Empfängersignals zu der Position der Werkzeugspitze (31), wobei
die Einrichtung (41) zum Positionieren der Werkzeugspitze (31) dazu eingerichtet ist, die Position der Werkzeugspitze (31) in einem Bereich innerhalb des Lichtstrahls (23) schrittweise entlang einer Richtung senkrecht zum Lichtstrahl (23) zu variieren, und
die Einrichtung (43) zum Zuordnen der Signalstärke des Empfängersignals zu der Position der Werkzeugspitze (31) dazu eingerichtet ist, bei jedem Schritt der Position der Werkzeugspitze (31) eine entsprechende Signalstärke des Empfängersignals zuzuordnen.

10. Vorrichtung nach Anspruch 8 oder 9, wobei
die Einrichtung (42) zum Ermitteln der Schwingungsamplitude des Werkzeugs (3) dazu eingerichtet ist, die Schwingungsamplitude des Werkzeugs (3) aus einer Differenz der maximalen Signalstärke und der minimalen Signalstärke des Empfängersignals zu ermitteln.

11. Vorrichtung nach Anspruch 9 oder 10, wobei
die Richtung senkrecht zum Lichtstrahl (23) einer Richtung einer Werkzeugachse (32) entspricht, oder
die Richtung senkrecht zum Lichtstrahl (23) einer Richtung senkrecht zu einer Werkzeugachse (32) entspricht.

12. Vorrichtung nach einem der Ansprüche 8 bis 11, wobei
der Empfänger (22) der Lichtschranke (2) dazu eingerichtet ist, das Empfängersignal als ein zu der vom Empfänger (22) detektierten Lichtstärke proportionales, analoges Spannungssignal zu erzeugen, und
die Einrichtung (13) zum Versetzen des Werkzeugs (3) in die Schwingung dazu eingerichtet ist, das Werkzeug (3) derart in die Schwingung zu versetzen, dass die Werkzeugspitze (31) innerhalb des Lichtstrahls (23) schwingt.

13. Vorrichtung nach einem der Ansprüche 8 bis 12, mit
einem Werkzeughalter (11) zum Aufnehmen des Werkzeugs (3);
einer im Werkzeughalter (11) angeordneten Sensoreinrichtung (12) zum Erzeugen eines Sensorsignals aus der Schwingung des Werkzeugs (3);
einer Einrichtung (44) zum Ermitteln einer Schwingungsfrequenz der Schwingung des Werkzeugs (3) aus dem Sensorsignal in Abhängigkeit der Schwingungsamplitude des Werkzeugs (3);
einer Einrichtung (45) zum Ermitteln der Schwingungsamplitude des Werkzeugs (3) aus dem Sensorsignal; und
einer Einrichtung (47) zum Zuordnen der Schwingungsamplitude des Werkzeugs (3) zu der Schwingungsfrequenz, wobei
die Einrichtung (47) zum Zuordnen der Schwingungsamplitude des Werkzeugs (3) zu der Schwingungsfrequenz dazu eingerichtet ist, bei jedem Schritt der Schwingungsfrequenz eine entsprechende Schwingungsamplitude des Werkzeugs (3) zuzuordnen.

14. Werkzeugmaschine (1), mit
der Vorrichtung nach einem der Ansprüche 8 bis 13, wobei
die Werkzeugmaschine (1) dazu eingerichtet ist, die Schwingungsamplitude der Schwingung des Werkzeugs (3) gemäß dem Verfahren nach einem der Ansprüche 1 bis 7 zu bestimmen.

## Claims

1. Method for determining a vibration amplitude of a tool (3) which is received in a tool holder (11) of a machine tool (1), comprising the steps of:
generating a light beam (23) of a light barrier (2) with a transmitter (21) for generating the light beam (23) and a receiver (22) for detecting a light intensity of the light beam (23);
generating a receiver signal on the basis of the light intensity of the light beam (23) detected by the receiver (22) of the light barrier (2);
positioning a tool tip (31) of the tool (3) in the light beam (23);
setting the tool (3) into a vibration by means of a piezo element (13) arranged in the tool holder (11) for setting the tool (3) into a vibration and a generator (46) which excites the piezo element (13) at a specific excitation frequency to the ultrasonic vibration; and
determining the vibration amplitude of the tool (3) from a modulation of the receiver signal brought about by the vibration of the tool (3), wherein
the tool (3) has at least one cutting edge which protrudes from the rest of the tool (3) in the direction of the vibration of the tool (3), and the cutting edge of the tool (3) protrudes from the rest of the tool (3) perpendicularly to the direction of the vibration of the tool (3).

2. Method according to Claim 1, wherein the method further comprises the following step:
setting the tool (3) into a rotation about an axis transversely or perpendicularly to the light beam (23) during the step of determining the vibration amplitude of the tool (3).

3. Method according to Claim 1 or 2, wherein
before setting the tool (3) into the vibration, the position of the tool tip (31) in the light beam (23) is varied in such a way that a signal intensity of the receiver signal changes as a function of the position of the tool tip (31), and
the position of the tool tip (31) in a region within the light beam (23) is varied in steps along a direction perpendicular to the light beam (23), and a corresponding signal intensity of the receiver signal is assigned to the position of the tool tip (31) in each step.

4. Method according to one of the preceding claims, wherein
the vibration amplitude of the tool (3) is determined from a difference between the maximum signal intensity and the minimum signal intensity of the receiver signal.

5. Method according to Claim 3 or 4, wherein
the direction perpendicular to the light beam (23) corresponds to a direction of a tool axis (32), or
the direction perpendicular to the light beam (23) corresponds to a direction perpendicular to a tool axis (32).

6. Method according to one of the preceding claims, wherein
the receiver signal is an analogue voltage signal generated by the receiver (22) and proportional to the light intensity detected by the receiver (22), and
the tool (3) is set into the vibration in such a way that the tool tip (31) vibrates within the light beam (23).

7. Method according to one of the preceding claims, comprising the further steps:
generating a sensor signal from the vibration of the tool (3) arranged in a tool holder (11) by a sensor device (12) arranged in the tool holder (11);
determining a vibration frequency of the vibration of the tool (3) from the sensor signal as a function of the vibration amplitude of the tool (3);
determining the vibration amplitude of the tool (3) from the sensor signal, wherein
the vibration frequency of the vibration of the tool (3) is varied in steps, and a corresponding vibration amplitude of the tool (3) is assigned to the vibration frequency in each step.

8. Device for determining a vibration amplitude of a tool (3) which is received in a tool holder (11) of a machine tool (1), comprising
a light barrier (2) with a transmitter (21) for generating a light beam (23) and a receiver (22) for detecting a light intensity of the light beam (23) and for generating a receiver signal on the basis of the detected light intensity;
a device (41) for positioning a tool tip (31) of the tool (3) in the light beam (23);
a piezo element (13) arranged in the tool holder (11) for setting the tool (3) into a vibration;
a generator (46) for varying the vibration frequency of the vibration of the tool (3) in steps, which excites the piezo element (13) at a specific excitation frequency to the ultrasonic vibration; and
a device (42) for determining the vibration amplitude of the tool (3) from a modulation of the receiver signal brought about by the vibration of the tool (3), wherein
the tool (3) has at least one cutting edge which protrudes from the rest of the tool (3) in the direction of the vibration of the tool (3), and the cutting edge of the tool (3) protrudes from the rest of the tool (3) perpendicularly to the direction of the vibration of the tool (3).

9. Device according to Claim 8, wherein
the device (41) for positioning the tool tip (31) is designed to vary the position of the tool tip (31) in the light beam (23) in such a way that a signal intensity of the receiver signal changes as a function of the position of the tool tip (31),
wherein the device further comprises:
a device (43) for assigning the signal intensity of the receiver signal to the position of the tool tip (31), wherein
the device (41) for positioning the tool tip (31) is designed to vary the position of the tool tip (31) in a region within the light beam (23) in steps along a direction perpendicular to the light beam (23), and
the device (43) for assigning the signal intensity of the receiver signal to the position of the tool tip (31) is designed to assign a corresponding signal intensity of the receiver signal to the position of the tool tip (31) in each step.

10. Device according to Claim 8 or 9, wherein
the device (42) for determining the vibration amplitude of the tool (3) is designed to determine the vibration amplitude of the tool (3) from a difference between the maximum signal intensity and the minimum signal intensity of the receiver signal.

11. Device according to Claim 9 or 10, wherein
the direction perpendicular to the light beam (23) corresponds to a direction of a tool axis (32), or
the direction perpendicular to the light beam (23) corresponds to a direction perpendicular to a tool axis (32).

12. Device according to one of Claims 8 to 11, wherein
the receiver (22) of the light barrier (2) is configured to generate the receiver signal as an analogue voltage signal proportional to the light intensity detected by the receiver (22), and
the device (13) for setting the tool (3) into the vibration is designed to set the tool (3) into the vibration in such a way that the tool tip (31) vibrates within the light beam (23).

13. Device according to one of Claims 8 to 12, having
a tool holder (11) for receiving the tool (3);
a sensor device (12) arranged in the tool holder (11) for generating a sensor signal from the vibration of the tool (3);
a device (44) for determining a vibration frequency of the vibration of the tool (3) from the sensor signal as a function of the vibration amplitude of the tool (3);
a device (45) for determining the vibration amplitude of the tool (3) from the sensor signal; and
a device (47) for assigning the vibration amplitude of the tool (3) to the vibration frequency, wherein
the device (47) for assigning the vibration amplitude of the tool (3) to the vibration frequency is designed to assign a corresponding vibration amplitude of the tool (3) to the vibration frequency in each step.

14. Machine tool (1), comprising
the device according to one of Claims 8 to 13, wherein
the machine tool (1) is designed to determine the vibration amplitude of the vibration of the tool (3) according to the method according to one of Claims 1 to 7.

## Revendications

1. Procédé pour déterminer une amplitude de vibration d'un outil (3), qui est logé dans un porte-outil (11) d'une machine-outil (1), comprenant les étapes suivantes :
produire un faisceau lumineux (23) d'une barrière lumineuse (2) avec un émetteur (21) pour produire le faisceau lumineux (23) et un récepteur (22) pour détecter une intensité lumineuse du faisceau lumineux (23) ;
produire un signal de récepteur sur la base de l'intensité lumineuse du faisceau lumineux (23) détectée par le récepteur (22) de la barrière lumineuse (2) ;
positionner une pointe d'outil (31) de l'outil (3) dans le faisceau lumineux (23) ;
mettre l'outil (3) en vibration au moyen d'un élément piézoélectrique (13) disposé dans le porte-outil (11) pour mettre l'outil (3) en vibration et un générateur (46), qui excite l'élément piézoélectrique (13) avec une fréquence d'excitation définie par rapport à la vibration ultrasonore ; et
déterminer l'amplitude de vibration de l'outil (3) à partir d'une modulation du signal de récepteur provoquée par la vibration de l'outil (3), dans lequel
l'outil (3) présente au moins une lame, qui fait saillie en direction de la vibration de l'outil (3) à partir du reste de l'outil (3), et la lame de l'outil (3) fait saillie du reste de l'outil (3) perpendiculairement à la direction de la vibration de l'outil (3).

2. Procédé selon la revendication 1, dans lequel le procédé présente en outre l'étape suivante :
mettre l'outil (3) en rotation autour d'un axe transversalement ou perpendiculairement au faisceau lumineux (23) pendant l'étape de détermination de l'amplitude de vibration de l'outil (3).

3. Procédé selon la revendication 1 ou 2, dans lequel avant la mise de l'outil (3) en vibration la position de la pointe d'outil (31) dans le faisceau lumineux (23) est modifiée de telle sorte qu'une intensité de signal du signal de récepteur change en fonction de la position de la pointe d'outil (31), et
la position de la pointe d'outil (31) dans une zone à l'intérieur du faisceau lumineux (23) est modifiée progressivement le long d'une direction perpendiculaire au faisceau lumineux (23) et
à chaque étape une intensité de signal correspondante du signal de récepteur est associée à la position de la pointe d'outil (31).

4. Procédé selon l'une quelconque des revendications précédentes, dans lequel
l'amplitude de vibration de l'outil (3) est déterminée à partir d'une différence de l'intensité de signal maximale et de l'intensité de signal minimale du signal de récepteur.

5. Procédé selon la revendication 3 ou 4, dans lequel
la direction perpendiculaire au faisceau lumineux (23) correspond à une direction d'un axe d'outil (32), ou
la direction perpendiculaire au faisceau lumineux (23) correspond à une direction perpendiculaire à un axe d'outil (32).

6. Procédé selon l'une quelconque des revendications précédentes, dans lequel
le signal de récepteur est un signal de tension analogique produit par le récepteur (22), proportionnel à l'intensité lumineuse détectée par le récepteur (22), et
l'outil (3) est mis en vibration de telle sorte que la pointe d'outil (31) vibre à l'intérieur du faisceau lumineux (23).

7. Procédé selon l'une quelconque des revendications précédentes, comprenant les autres étapes suivantes :
produire un signal de capteur à partir de la vibration de l'outil (3) disposé dans un porte-outil (11) par un système de capteur (12) disposé dans le porte-outil (11) ;
déterminer une fréquence de vibration de la vibration de l'outil (3) à partir du signal de capteur en fonction de l'amplitude de vibration de l'outil (3) ;
déterminer l'amplitude de vibration de l'outil (3) à partir du signal de capteur, dans lequel
la fréquence de vibration de la vibration de l'outil (3) est modifiée progressivement et à chaque étape une amplitude de vibration correspondante de l'outil (3) est associée à la fréquence de vibration.

8. Dispositif pour déterminer une amplitude de vibration d'un outil (3), qui est logé dans un porte-outil (11) d'une machine-outil (1), comprenant
une barrière lumineuse (2) avec un émetteur (21) pour produire un faisceau lumineux (23) et un récepteur (22) pour détecter une intensité lumineuse du faisceau lumineux (23) et pour produire un signal de récepteur sur la base de l'intensité lumineuse détectée ;
un système (41) pour positionner une pointe d'outil (31) de l'outil (3) dans le faisceau lumineux (23) ;
un élément piézoélectrique (13) disposé dans le porte-outil (11) pour mettre l'outil (3) en vibration ;
un générateur (46) pour modifier progressivement la fréquence de vibration de la vibration de l'outil (3), qui excite l'élément piézoélectrique (13) avec une fréquence d'excitation définie par rapport à la vibration ultrasonore ; et
un système (42) pour déterminer l'amplitude de vibration de l'outil (3) à partir d'une modulation du signal de récepteur provoquée par la vibration de l'outil (3), dans lequel
l'outil (3) présente au moins une lame, qui fait saillie du reste de l'outil (3) en direction de la vibration de l'outil (3), et la lame de l'outil (3) fait saillie du reste de l'outil (3) perpendiculairement à la direction de la vibration de l'outil (3).

9. Dispositif selon la revendication 8, dans lequel
le système (41) pour positionner la pointe d'outil (31) est conçu pour modifier la position de la pointe d'outil (31) dans le faisceau lumineux (23), de telle sorte qu'une intensité de signal du signal de récepteur change en fonction de la position de la pointe d'outil (31),
dans lequel le dispositif présente en outre :
un système (43) pour associer l'intensité de signal du signal de récepteur à la position de la pointe d'outil (31), dans lequel
le système (41) pour positionner la pointe d'outil (31) est conçu pour modifier la position de la pointe d'outil (31) dans une zone à l'intérieur du faisceau lumineux (23) progressivement le long d'une direction perpendiculaire au faisceau lumineux (23), et
le système (43) pour associer l'intensité de signal du signal de récepteur à la position de la pointe d'outil (31) est conçu pour associer à chaque étape une intensité de signal correspondante du signal de récepteur à la position de la pointe d'outil (31).

10. Dispositif selon la revendication 8 ou 9, dans lequel
le système (42) pour déterminer l'amplitude de vibration de l'outil (3) est conçu pour déterminer l'amplitude de vibration de l'outil (3) à partir d'une différence de l'intensité de signal maximale et de l'intensité de signal minimale du signal de récepteur.

11. Dispositif selon la revendication 9 ou 10, dans lequel
la direction perpendiculaire au faisceau lumineux (23) correspond à une direction d'un axe d'outil (32), ou
la direction perpendiculaire au faisceau lumineux (23) correspond à une direction perpendiculaire à un axe d'outil (32).

12. Dispositif selon l'une quelconque des revendications 8 à 11, dans lequel
le récepteur (22) de la barrière lumineuse (2) est conçu pour produire le signal de récepteur en tant que signal de tension analogique proportionnel à l'intensité lumineuse détectée par le récepteur (22), et
le système (13) pour mettre l'outil (3) en vibration est conçu pour mettre l'outil (3) en vibration, de telle sorte que la pointe d'outil (31) vibre à l'intérieur du faisceau lumineux (23).

13. Dispositif selon l'une quelconque des revendications 8 à 12, comprenant
un porte-outil (11) pour loger l'outil (3) ;
un système de capteur (12) disposé dans le porte-outil (11) pour produire un signal de capteur à partir de de la vibration de l'outil (3) ;
un système (44) pour déterminer une fréquence de vibration de la vibration de l'outil (3) à partir du signal de capteur en fonction de l'amplitude de vibration de l'outil (3) ;
un système (45) pour déterminer l'amplitude de vibration de l'outil (3) à partir du signal de capteur ; et
un système (47) pour associer l'amplitude de vibration de l'outil (3) à la fréquence de vibration, dans lequel
le système (47) pour associer l'amplitude de vibration de l'outil (3) à la fréquence de vibration est conçu pour à chaque étape associer une amplitude de vibration correspondante de l'outil (3) à la fréquence de vibration.

14. Machine-outil (1), comprenant
le dispositif selon l'une quelconque des revendications 8 à 13, dans laquelle
la machine-outil (1) est conçue pour définir l'amplitude de vibration de la vibration de l'outil (3) selon le procédé selon l'une quelconque des revendications 1 à 7.
